# FASCICULE DE BREVET EUROPEEN

(11) **EP 3 231 233 B1**
(45) Date de publication et mention de la délivrance du brevet: **13.11.2019**
(21) Numéro de dépôt: 15808606.6
(22) Date de dépôt: 14.12.2015
(51) Int. Cl.: H04W 40/32, H04W 84/18

(54) **PROCEDE DE TRANSMISSION DANS UN RESEAU " CLUSTERISE "**
ÜBERTRAGUNGSVERFAHREN IN EINEM GEBÜNDELTEN NETZWERK
TRANSMISSION METHOD IN A "CLUSTERED" NETWORK

(30) Priorité: 12.12.2014 FR 1402835
(43) Date de publication de la demande: 18.10.2017
(73) Titulaire: THALES, 92400 Courbevoie (FR)
(72) Inventeur: ANOUAR, Hicham, 92622 Gennevilliers Cedex (FR)
(74) Mandataire: Dudouit, Isabelle
(86) Numéro de dépôt international: PCT/EP2015/079521
(87) Numéro de publication internationale: WO 2016/092111

(56) Documents cités:
- US-A1- 2014 307 633
- US-B1- 7 639 652
- SHAH GHALIB A ET AL: "Spectrum-aware cluster-based routing for cognitive radio sensor networks", 2013 IEEE INTERNATIONAL CONFERENCE ON COMMUNICATIONS (ICC), IEEE, 9 juin 2013 (2013-06-09), pages 2885-2889, XP032522411, ISSN: 1550-3607, DOI: 10.1109/ICC.2013.6654979 [extrait le 2013-11-04]
- TSENG Y-C ET AL: "An architecture for power-saving communications in a wireless mobile ad hoc network based on location information", MICROPROCESSORS AND MICROSYSTEMS, IPC BUSINESS PRESS LTD. LONDON, GB, vol. 28, no. 8, 4 octobre 2004 (2004-10-04), pages 457-465, XP004559833, ISSN: 0141-9331, DOI: 10.1016/J.MICPRO.2004.05.002
- TARANOVS R ET AL: "Medium access protocol for efficient communication in clustered wireless sensor networks", TELECOMMUNICATIONS FORUM (TELFOR), 2011 19TH, IEEE, 22 novembre 2011 (2011-11-22), pages 582-585, XP032106087, DOI: 10.1109/TELFOR.2011.6143615 ISBN: 978-1-4577-1499-3

## Description

L'invention concerne un procédé de transmission de données au sein d'un réseau de communication sans fil ad hoc « clusterisé », c'est-à-dire dans lequel les nœuds émetteurs/récepteurs sont distribués au sein de plusieurs groupes ou clusters, ayant chacun un chef de groupe ou chef de « cluster ».

L'un des problèmes techniques existant dans les réseaux de communications sans fil ad hoc est de permettre à un chef de cluster de communiquer avec les autres chefs de clusters voisins avec le même nombre de ressources radio quelque soit la topologie du réseau. Les techniques connues de l'art antérieur se basent sur l'établissement de différents chemins de communication, en fonction de la topologie du réseau, pour permettre à un chef de cluster d'atteindre les chefs des clusters voisins.

Dans un réseau de transmission organisé en clusters, chaque cluster opère sur un canal radio (fréquence, code,..) différent et un canal radio commun est utilisé pour tout le réseau pour la signalisation inter-cluster. Chaque cluster a un accès garanti périodique au canal commun pour diffuser de la signalisation ou des données aux autres clusters. Les communications intra-cluster sont coordonnées par le chef de cluster. Les communications inter-clusters sont par contre difficiles à mettre en place car elles nécessitent la coordination entre les différents chefs de cluster pour le partage et l'accès aux ressources radio. Comme les chefs inter-clusters ne sont pas toujours en visibilité directe les uns des autres, i.e., avec la possibilité d'échanger des informations de manière fiable directement sans passer par des nœuds relais, la ressource de signalisation dédiée à ces échanges doit être utilisée efficacement pour permettre à chaque chef de cluster de faire parvenir ses messages de signalisation à tous les chefs des clusters voisins indépendamment de la topologie du réseau.

Le document de Shah Ghalib et al, intitulé « Spectrum-aware cluster-based routing for cognitive radio sensor networks », 9 juin 2013, décrit un procédé d'organisation de réseau qui désigne un chef de cluster en utilisant un critère d'énergie. Les nœuds d'un cluster se synchronisent ensuite sur ce chef de cluster.

Le document de Tseng Y-C et al, intitulé « An architecture for power-saving communications in a wireless mobile ad hoc network based on location information, du 4 octobre 2004, divulgue une architecture spécifique permettant de gérer l'énergie.

Le document de Taranovs R et al, intitulé « Médium access protocol for efficient communication in clustered wireless sensor networks », IEEE, 22 novembre 2011, décrit un protocole anticollision basé sur le mode TDMA.

Le brevet US 7 639 652 divulgue un procédé de routage de paquets dans des réseaux utilisant le protocole TDMA.

L'un des objectifs de la présente invention est de permettre à chaque chef de cluster de diffuser sa signalisation inter-cluster à tous ses clusters voisins, avec une quantité de ressources radio qui ne dépend pas de la topologie du réseau. Un tel accès permettra de réduire le besoin de signalisation inter-cluster et donc de pouvoir programmer cet accès plus fréquemment dans le temps rendant la signalisation ainsi plus rapide.

L'invention concerne un procédé dans lequel on utilise un mécanisme de signalisation entre les groupes ou clusters, en utilisant les nœuds réguliers d'un cluster pour relayer d'une manière coopérative la signalisation des chefs de cluster vers d'autres nœuds ou chefs de cluster.

Dans la suite de la description, on désigne par « nœud régulier » un nœud d'un réseau équipé de moyens de communication, un « chef de cluster », un nœud régulier comprenant en plus un module de gestion adapté à gérer les nœuds réguliers. Le terme « intra » désigne les nœuds situés dans un groupe et les échanges au sein de ce groupe. Le terme « inter » désigne les échanges entre différents groupes. L'expression « nœud dans le voisinage » ou « en portée radio » désigne des nœuds qui sont situés en portée radio d'un nœud émetteur, c'est-à-dire qui peuvent s'échanger des informations en utilisant les canaux de communication sans passer par des nœuds relais.

Les abréviations anglo-saxonnes suivantes seront utilisées :
- CH pour désigner un canal de communication, TX pour l'émission et RX pour la réception de signaux,
- IRSCH : canal de signalisation inter-cluster plus connu sous l'expression anglo-saxonne « Inter-Cluster Relay Signaling Channel »,
- RSCH : canal de signalisation relais, ou en anglo-saxon « Relay Signaling Channel,
- CHSCH : canal de signalisation chef de cluster, plus connu sous l'expression anglo-saxonne « Cluster Head Signaling Channel ».

L'invention concerne un procédé et un système comme définis dans les revendications 1 et 3.

L'invention concerne un procédé pour diffuser un ou plusieurs messages de signalisation dans un réseau de communication comportant au moins deux clusters, chacun des clusters comprenant au moins un chef de cluster adapté à gérer des communications, et plusieurs nœuds équipés de moyens d'émission/réception un cluster opérant sur un canal radio dédié et tous les clusters accédant à un canal commun CS où chaque cluster dispose d'un créneau temporel du canal commun CS dédié à l'ensemble des nœuds appartenant audit cluster, le procédé comportant au moins les étapes suivantes :
- au moins le chef de cluster d'un premier cluster émet le message de signalisation vers un ensemble de nœuds situés dans son cluster, en utilisant son canal radio dédié,
- les nœuds du premier cluster ayant reçu et décodé le message de signalisation relayent ce message de signalisation vers un ou plusieurs nœuds relais des autres clusters du réseau qui sont en portée radio en utilisant un mécanisme de transmission cohérente coopérative distribuée sur le créneau temporel du canal commun CS dédié audit premier cluster de la manière suivante,
- si deux nœuds relais sélectionnés ne partagent pas de voisinage externe alors ils émettent sur la même ressource radio sans interférer mutuellement,
- si deux nœuds sélectionnés ont en commun une partie de leurs voisinages externes, alors ils utilisent une même ressource radio d'une manière coopérative pour améliorer la qualité de leur transmission,
- le ou les nœuds relais ayant reçu et décodé le message de signalisation le transmettent à leur chef de cluster en utilisant un procédé de transmission coopérative distribuée sur leur canal radio dédié.

Un canal de communication dédié au cluster comporte un slot de réception, plusieurs slots RSCHⱼ, utilisés par un ensemble de nœuds appartenant à un cluster pour relayer de manière coopérative la signalisation inter-cluster reçue des clusters voisins vers leur chef de cluster, un slot CHSCHⱼ de signalisation dédié aux chefs de cluster.

L'invention concerne aussi un système de diffusion de messages de signalisation au sein d'un réseau de communication comportant au moins deux clusters, chacun des clusters comprenant au moins un chef de cluster adapté à gérer des communications, et plusieurs nœuds équipés de moyens d'émission/réception, chacun des clusters opérant sur un canal radio dédié et tous les clusters accédant à un canal commun CS où chaque cluster dispose d'un créneau temporel du canal commun CS dédié à l'ensemble des nœuds appartenant audit cluster caractérisé en ce que :
- au moins le chef de cluster du premier cluster comprend un module adapté à émettre un message de signalisation vers un ensemble de nœuds situés dans son cluster, en utilisant un canal radio dédié,
- les nœuds du premier cluster sont équipés de moyens de réception et de décodage du message de signalisation et de moyens de relayage du message de signalisation vers un ou plusieurs nœuds des autres clusters du réseau qui sont en portée radio en utilisant un mécanisme de transmission cohérente coopérative distribuée sur une ressource radio d'un canal commun dédié audit premier cluster de la manière suivante,

- si deux nœuds relais sélectionnés ne partagent pas de voisinage externe alors ils émettent sur la même ressource radio sans interférer mutuellement,
- si deux nœuds sélectionnés ont en commun une partie de leurs voisinages externes, alors ils utilisent une même ressource radio d'une manière coopérative pour améliorer la qualité de leur transmission,
- le ou les nœuds ayant reçu et décodé le message de signalisation le transmettent à leur chef de cluster en utilisant un procédé de transmission coopérative distribuée sur leur canal radio dédié.

D'autres caractéristiques et avantages de la présente invention apparaîtront mieux à la lecture de la description qui suit donnée à titre illustratif et nullement limitatif annexée des figures qui représentent :
- La figure 1, un exemple de réseau composé de plusieurs clusters ayant chacun un chef de cluster, et
- La figure 2 et la figure 3, deux exemples des étapes mises en œuvre par le procédé.

Le réseau ad hoc dans lequel est mis en œuvre l'invention est organisé en groupes ou clusters, chaque cluster opérant sur un canal radio différent (fréquence, code, etc.). Un canal radio commun est utilisé pour tout le réseau pour la signalisation inter-cluster. Chaque cluster a un accès garanti périodique au canal commun pour diffuser de la signalisation ou des données aux autres clusters. Le procédé repose notamment sur l'exploitation de la diversité spatiale du réseau ainsi que sur le concept du relayage coopératif pour permettre à chaque chef de cluster de sélectionner et d'utiliser un ou plusieurs nœuds relais dans son groupe pour atteindre un ou plusieurs ensembles de clusters voisins.

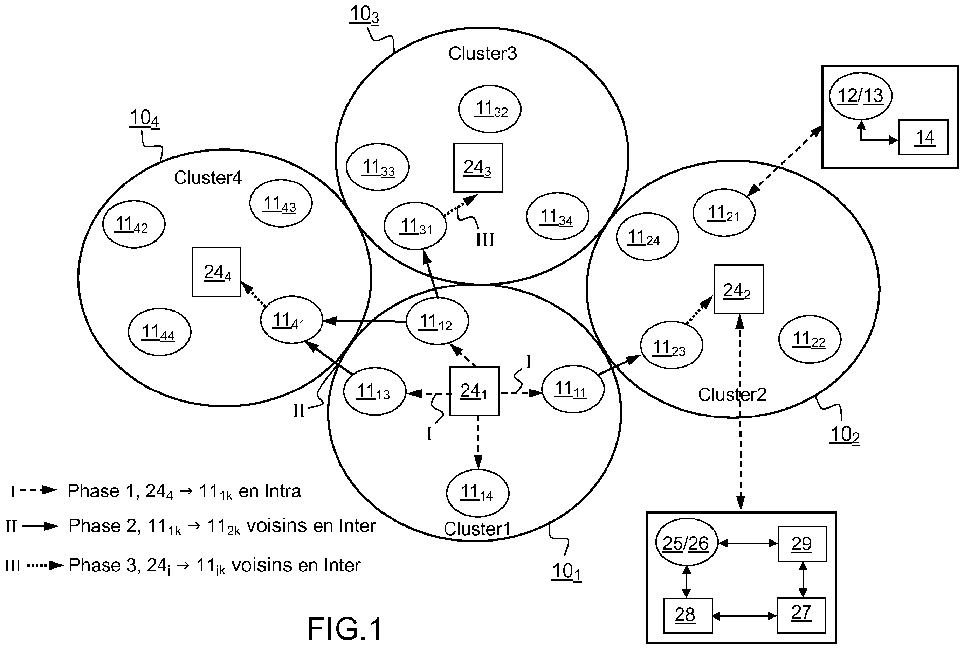

La figure 1 schématise un exemple de réseau de transmission comprenant plusieurs clusters 10i, chaque cluster 10i comprend plusieurs nœuds 11ik pourvus chacun d'un module d'émission réception 12, 13, d'un module 14 adapté à la transmission coopérative, un chef de cluster 24ⱼ, comprenant un module d'émission/réception 25, 26, un module de décodage des messages de signalisation 29, un module de gestion 27 des communications de l'ensemble des nœuds présents dans le cluster dont il est le chef, un module adapté pour la transmission coopérative 28.

Chacun des clusters opère par exemple sur un canal radio, fréquence Fc, code Mc, différent et dispose d'un accès périodique à un canal de signalisation commun CS.

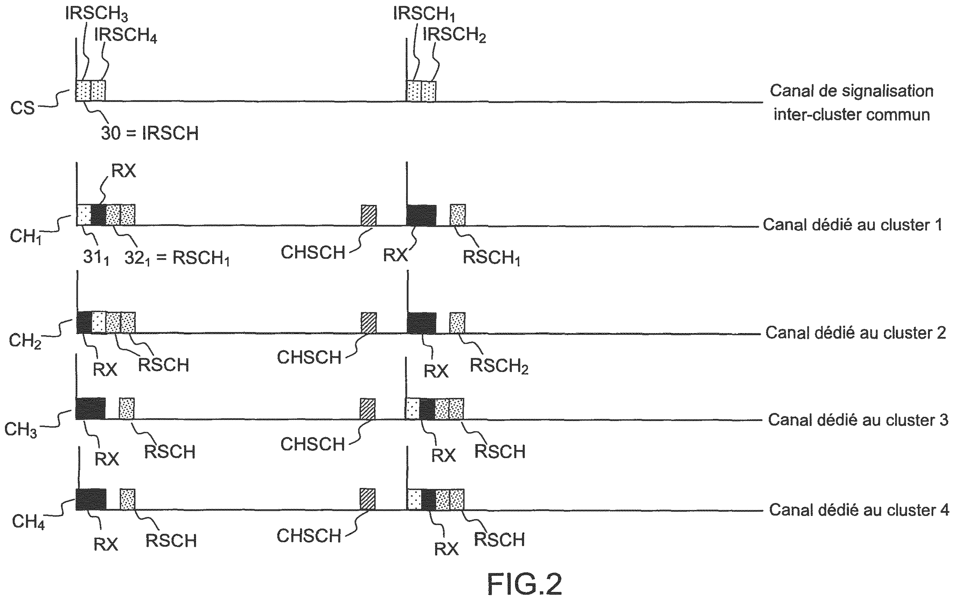

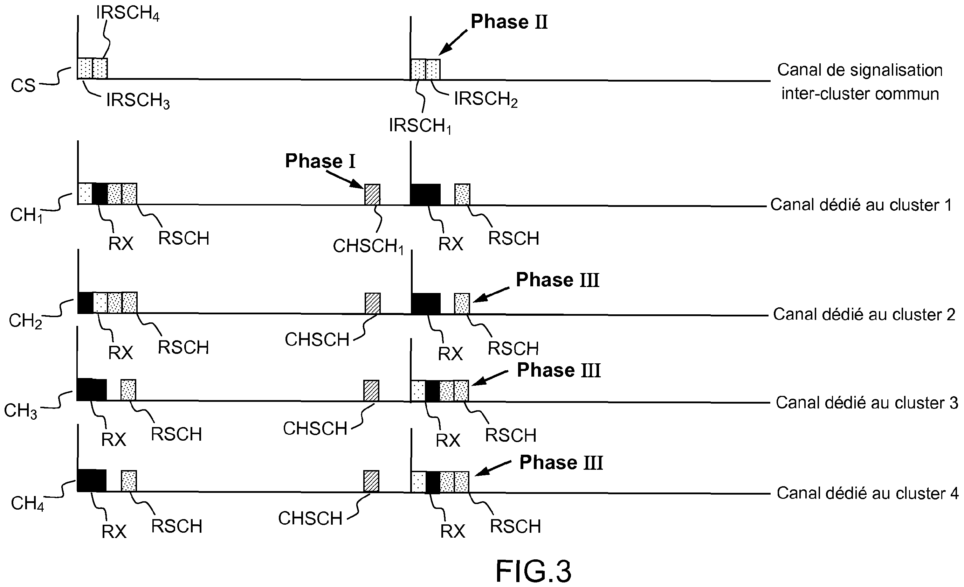

Sur la figure 1, les flèches I, II, III correspondent à trois phases du procédé selon l'invention qui vont être explicitées ci-après en relation avec les figures 2 et 3. Les transmissions se font sur des ressources radio dédiées sans requêtes préalables.

Lors d'une première phase, un chef de cluster 24₁ va diffuser le message de signalisation à transmettre aux chefs de cluster 24ⱼ situés dans les autres clusters du réseau de communication vers les nœuds réguliers 11₁ₖ présents dans son cluster 10₁. La diffusion se fait, par exemple, sur une ressource radio dédiée, temps, fréquence, code. Les nœuds réguliers 11₁ₖ de ce cluster 10₁ écoutent cette ressource radio CH₁. Les nœuds réguliers 11₁ₖ sont des nœuds relais qui vont permettre le transfert du message M de signalisation du chef de cluster vers les chefs de cluster 24ⱼ situés dans les autres clusters 10ⱼ du réseau.

Le chef de cluster 24₁ identifie ou sélectionne les nœuds relais pour atteindre l'ensemble des clusters voisins, selon un procédé connu de l'homme du métier. Un chef de cluster dispose d'une base de données donnant la configuration du réseau de communication.

Si deux nœuds relais 11₁₂, 11₁₁, sélectionnés ne partagent pas de voisinage externe, i.e. nœuds voisins n'appartenant pas au même groupe, i.e. voisins à l'extérieur de leur groupe/cluster, alors ils peuvent émettre sur la même ressource radio, ce qui correspond à de la diversité spatiale.

Si deux nœuds relais 11₁₂, 11₁₃ sélectionnés ont en commun une partie de leurs voisinages externes alors le concept de relayage coopératif permet à la fois de leur allouer la même ressource radio et de rendre plus robuste aux erreurs de transmission le lien radio vers leurs voisinages communs.

A la fin de la première phase I, les nœuds relais 11₁₁, 11₁₂, 11₁₃, du cluster 10₁ source disposent des informations ou du message à transmettre aux différents chefs de clusters 24ⱼ.

Lors d'une deuxième phase II, les nœuds réguliers du cluster 10₁ source qui ont reçu le message de signalisation M, vont relayer le message M à destination des chefs des clusters voisins 24ⱼ, en utilisant le mécanisme de transmission coopérative, vers leurs voisinages externes appartenant à un cluster différent (10₂, 10₃ et 10₄). Le relayage du message M se fait en utilisant une technique de transmission cohérente coopérative du message. Cette transmission est, par exemple, effectuée, sur le canal de communication commun CS à tous les clusters, sur une ressource radio dédiée au cluster 10₁ auquel appartient le chef 24₁ émetteur du message de signalisation M. Tous les nœuds 11ⱼₖ d'un cluster 24ⱼ écoutent les ressources radio dédiées au relayage des autres clusters. A l'issue de cette deuxième étape II, certains nœuds relais 11₂₃, 11₄₁, 11₄₂, 11₃₁, des clusters 24ⱼ ont reçu le message M à transmettre à leurs chefs de clusters respectifs.

Lors d'une troisième phase III, tous les nœuds d'un ou de plusieurs clusters voisins du cluster 10₁ qui ont décodé correctement le message M en provenance du cluster émetteur 10₁ relayent ce message M en utilisant un protocole de transmission cohérente de message vers leur chef de cluster 24₂, 24₃, 24₄ (par exemple sur la figure 1), selon un mécanisme de transmission coopérative et des étapes connues de l'homme du métier. Pour cela, ils utilisent une ressource radio dédiée qui est écoutée par le chef de cluster.

Les figures 2 et 3 schématisent la mise en œuvre des trois phases précédemment décrites.

Sur la figure 2, on a représenté le canal de signalisation inter-cluster commun CS, le canal CH₁ dédié au cluster 10₁, le canal CH₂ dédié au cluster 10₂, le canal CH₃ dédié au cluster 10₃, et le canal CH₄ dédié au cluster 10₄.

Le canal de signalisation inter-cluster commun comprend une signalisation inter-clusters IRSCH, 30, pour le relayage d'une manière coopérative entre cluster, correspondant à un créneau temporel ou slot utilisé par un ensemble de nœuds appartenant à un certain cluster pour relayer la signalisation de leur chef de cluster vers les clusters voisins.

Le premier canal CH₁ dédié au premier cluster 10₁ comporte un slot 31₁ de réception RX₁, plusieurs slots RSCH₁, 32₁, utilisés par un ensemble de nœuds appartenant à un certain cluster pour relayer de manière coopérative la signalisation inter-cluster reçue des clusters voisins vers leur chef de cluster, un slot CHSCH₁ de signalisation dédié aux chefs de cluster.

On retrouve cette configuration pour les canaux dédiés aux autres clusters.

Le deuxième canal CH₂ dédié au deuxième cluster 10₂ comporte un slot 31₂ de réception RX₁, plusieurs slots RSCH₂, 32₂, utilisés par un ensemble de nœuds appartenant à un certain cluster pour relayer de manière coopérative la signalisation inter-cluster reçue des clusters voisins vers leur chef de cluster, un slot CHSCH₂ de signalisation dédié aux chefs de cluster.

Le troisième canal CH₃ dédié au troisième cluster 10₃ comporte un slot 31₃ de réception RX₁, plusieurs slots RSCH₃, 32₃, utilisés par un ensemble de nœuds appartenant à un certain cluster pour relayer de manière coopérative la signalisation inter-cluster reçue des clusters voisins vers leur chef de cluster, un slot CHSCH₃ de signalisation dédié aux chefs de cluster.

Le quatrième canal CH₄ dédié au quatrième cluster 10₄ comporte un slot 31₄ de réception RX₁, plusieurs slots RSCH₄, 32₄, utilisés par un ensemble de nœuds appartenant à un certain cluster pour relayer de manière coopérative la signalisation inter-cluster reçue des clusters voisins vers leur chef de cluster, un slot CHSCH₄ de signalisation dédié aux chefs de cluster.

La figure 3 schématise les trois phases du procédé selon l'invention, la phase I, la phase II, la phase III.

Dans un premier temps le chef du cluster 24₁ du premier cluster ou cluster source 101 envoie un message M de signalisation destiné aux différents chefs de clusters voisins aux nœuds de son cluster (les clusters voisins contiennent des nœuds dans le voisinage des nœuds de son cluster). Cette émission a lieu sur une ressource radio dédiée que tous les nœuds réguliers du cluster sont obligés d'écouter, slot de signalisation CHSCH₁.

Les nœuds réguliers 11₁ₖ du premier cluster 10₁ ayant reçu le message M, relaye le message de signalisation de leur chef de cluster 24₁ vers les clusters voisins 10ⱼ, slot IRSCH, phase II, vers les nœuds réguliers 11ⱼₖ d'autres clusters 10j en utilisant une ressource radio dédiée (slot IRSCH sur le canal commun CS) au cluster auquel appartient le chef du cluster 24₁ émetteur du message. Ce relayage se fait en utilisant une transmission cohérente coopérative du message. Tous les nœuds d'un cluster sont obligés d'écouter les ressources radio dédiées au relayage des autres clusters

Les nœuds réguliers 11ⱼₖ des clusters 10ⱼ voisins du premier cluster source 101 qui ont reçu et décodé correctement un message M de signalisation en provenance du cluster source 101 vont le relayer en utilisant une transmission cohérente coopérative de ce message, phase III, vers leur chef de cluster 24j en utilisant une ressource radio dédiée que le chef de cluster est dans l'obligation d'écouter, slots RSCH.

Le procédé selon l'invention permet notamment à un chef de cluster de diffuser sa signalisation inter-cluster à ses clusters voisins avec une quantité de ressources radio qui ne dépend pas de la topologie du réseau. Un tel accès permet de réduire le besoin de signalisation inter-cluster et ainsi de pouvoir programmer cet accès plus fréquemment dans le temps. La taille et le nombre de ressources radio qui permettent d'atteindre tout le voisinage d'un cluster sont indépendants de la topologie du réseau. Le procédé permet un gain sur la taille de signalisation en ayant un vrai canal de diffusion pour la signalisation point-à-multipoints et multiplexage possible de la signalisation point-à-point.

## Revendications

1. Procédé pour diffuser un ou plusieurs messages de signalisation dans un réseau de communication comportant au moins deux clusters (10₁, 10₂), chacun des clusters comprenant au moins un chef de cluster (24₁, 24₂) adapté à gérer des communications et plusieurs nœuds (11₁ₖ, 11₂ₖ) équipés de moyens d'émission/réception (12, 13), chacun des clusters opérant sur un canal radio dédié (CH_{1'} CH₂) et tous les clusters accédant à un canal commun CS où chaque cluster dispose d'un créneau temporel du canal commun CS dédié à l'ensemble des nœuds appartenant audit cluster, le procédé comportant au moins les étapes suivantes:
• au moins le chef de cluster (24₁) du premier cluster (10₁) émet le message de signalisation M vers un ensemble de nœuds (11₁ₖ) situés dans son cluster (10₁), en utilisant son canal radio dédié CH₁,
• les nœuds (11₁ₖ) du premier cluster (10₁) ayant reçu et décodé le message de signalisation M relayent ce message de signalisation M vers un ou plusieurs nœuds relais (11ⱼₖ) appartenant à d'autres clusters du réseau qui sont en portée radio en utilisant un mécanisme de transmission cohérente coopérative distribuée sur le créneau temporel du canal commun CS, dédié au premier cluster de la manière suivante:
le chef de cluster (24₁) sélectionne un ou plusieurs nœuds (11₁ₖ) pour atteindre les clusters voisins,
• si deux nœuds (11₁ₖ) sélectionnés ne partagent pas de voisinage externe ils émettent sur le même créneau temporel, sans interférer mutuellement,
• si deux nœuds (11₁ₖ) sélectionnés ont en commun une partie de leurs voisinages externes, ils utilisent le même créneau temporel d'une manière coopérative pour améliorer la qualité de leur transmission,
• le ou les nœuds relais (11ⱼₖ) des autres clusters (10ⱼ) ayant reçu et décodé le message de signalisation M le transmettent à leur chef de cluster (24ⱼ) en utilisant un procédé de transmission coopérative distribuée sur leur canal dédié CHⱼ.

2. Procédé selon la revendication 1 **caractérisé en ce qu'**un canal CHⱼ dédié au cluster (10ⱼ) comporte un slot (31ⱼ) de réception RXⱼ, plusieurs slots RSCHⱼ, (32ⱼ), utilisés par un ensemble de nœuds appartenant à un cluster pour relayer d'une manière coopérative la signalisation inter-cluster reçue des clusters voisins vers leur chef de cluster, un slot CHSCHⱼ de signalisation dédié aux chefs de cluster.

3. Système de diffusion de messages de signalisation au sein d'un réseau de communication comportant au moins deux clusters (10₁, 10₂), chacun des clusters comprenant au moins un chef de cluster (24₁, 24₂) adapté à gérer des communications et plusieurs nœuds (11₁ₖ, 11₂ₖ) équipés de moyens d'émission/réception (12, 13), chacun des clusters opérant sur un canal radio dédié (CH₁, CH₂) et tous les clusters accédant à un canal commun CS où chaque cluster dispose d'un créneau temporel du canal commun CS dédié à l'ensemble des nœuds appartenant audit cluster, le système comprenant:
• au moins le chef de cluster (24₁) du premier cluster (101) comprend un module adapté à émettre un message de signalisation M vers un ensemble de nœuds (11₁ₖ) situés dans son cluster (10₁), en utilisant un canal radio dédié CH₁,
• les nœuds (11₁ₖ) du premier cluster (10₁) sont équipés de moyens de réception et de décodage du message de signalisation M et de moyens de relayage du message de signalisation M vers un ou plusieurs nœuds (11ⱼₖ) des autres clusters du réseau qui sont en portée radio en utilisant un mécanisme de transmission cohérente coopérative distribuée, sur une ressource radio d'un canal commun CS dédiée audit premier cluster de la manière suivante:
le chef de cluster (24₁) est configuré à sélectionner un ou plusieurs nœuds (11₁ₖ) pour atteindre les clusters voisins,
• si deux nœuds sélectionnés (11₁ₖ) ne partagent pas de voisinage externe ils sont configurés à emmètre sur le même créneau temporel, sans interférer mutuellement,
• si deux nœuds sélectionnés (11₁ₖ) ont en commun une partie de leurs voisinages externes, ils sont configurés à utiliser le même créneau temporel d'une manière coopérative pour améliorer la qualité de leur transmission,
• le ou les nœuds relais (11ⱼₖ) des autres clusters ayant reçu et décodé le message de signalisation M sont configurés à le transmettre à leur chef de cluster (24ⱼ) en utilisant un procédé de transmission coopérative distribuée sur leur canal radio dédié CHⱼ.

4. Système selon la revendication 3 **caractérisé en ce qu'**un canal CHⱼ dédié à un cluster (10ⱼ) comporte un slot (31ⱼ) de réception RXⱼ, plusieurs slots de relayage de signalisation RSCHⱼ, (32ⱼ), utilisés par un ensemble de nœuds appartenant à un certain cluster pour relayer la signalisation inter-cluster reçue des clusters voisins vers leur chef de cluster, un slot CHSCHⱼ de signalisation dédié aux chefs de cluster.

## Patentansprüche

1. Verfahren zum Verteilen von einer oder mehreren Signalisierungsnachrichten in einem Kommunikationsnetz, das wenigstens zwei Cluster (10₁, 10₂) umfasst, wobei jedes der Cluster wenigstens einen zum Verwalten der Kommunikationen ausgelegten Cluster-Führer (24₁, 24₂) und mehrere mit Sende-/Empfangsmitteln (12, 13) ausgestattete Knoten (11ᵢₖ, 11₂ₖ) umfasst, wobei jedes der Cluster auf einem dedizierten Funkkanal (CH₁, CH₂) arbeitet und
wobei alle Cluster auf einen gemeinsamen Kanal CS zugreifen, wo jedes Cluster über einen Zeitschlitz des gemeinsamen Kanals CS verfügt, dediziert für die Gruppe von zu dem Cluster gehörenden Knoten, wobei das Verfahren wenigstens die folgenden Schritte beinhaltet:
• wenigstens der Cluster-Führer (24₁) des ersten Clusters (10₁) sendet die Signalisierungsnachricht M zu einer Gruppe von Knoten (11₁ₖ), die sich in seinem Cluster (10₁) befinden, unter Nutzung seines dedizierten Funkkanals CH₁,
• die Knoten (11₁ₖ) des ersten Clusters (10₁), die die Signalisierungsnachricht M empfangen und decodiert haben, leiten diese Signalisierungsnachricht M zu einem oder mehreren Relais-Knoten (11ⱼₖ) weiter, die zu anderen Clustern des Netzwerks gehören, die innerhalb der Funkreichweite sind, unter Nutzung eines auf dem Zeitschlitz des gemeinsamen Kanals CS verteilten, kooperativen, kohärenten Übertragungsmechanismus, dediziert für das erste Cluster auf die folgende Weise:
der Cluster-Führer (24₁) wählt einen oder mehrere Knoten (11₁ₖ) zum Erreichen der Nachbar-Cluster,
• wenn zwei gewählte Knoten (11₁ₖ) die externe Nachbarschaft nicht teilen, dann senden sie auf demselben Zeitschlitz, ohne sich gegenseitig zu stören,
• wenn zwei gewählte Knoten (11₁ₖ) einen Teil ihrer externen Nachbarschaft gemeinsam haben, dann nutzen sie denselben Zeitschlitz auf eine kooperative Weise, um die Qualität ihrer Übertragung zu verbessern,
• der oder die Relais-Knoten (11ⱼₖ) von anderen Clustern (10ⱼ), die die Signalisierungsnachricht M empfangen und decodiert haben, senden sie zu ihrem Cluster-Führer (24ⱼ) unter Nutzung des verteilten kooperativen Übertragungsverfahrens auf ihrem dedizierten Kanal CHⱼ.

2. Verfahren nach Anspruch 1, **dadurch gekennzeichnet, dass** ein für das Cluster 10ⱼ dedizierter Kanal CHⱼ Folgendes umfasst: einen Empfangsschlitz RXⱼ (31ⱼ), mehrere Schlitze RSCHⱼ (32ⱼ), die von einer Gruppe von Knoten benutzt werden, die zu einem Cluster gehören, zum Weiterleiten der von den Nachbar-Clustern empfangenen Inter-Cluster-Signalisierung auf kooperative Weise zu ihrem Cluster-Führer, einen Signalisierungsschlitz CHSCHⱼ, der für die Cluster-Führer dediziert ist.

3. System zum Verteilen von Signalisierungsnachrichten im Innern eines Kommunikationsnetzes, das wenigstens zwei Clustern (10₁, 10₂) umfasst, wobei jedes der Cluster wenigstens einen zum Verwalten der Kommunikationen ausgelegten Cluster-Führer (24₁, 24₂) und mehrere mit Sende-/Empfangsmitteln (12, 13) ausgestattete Knoten (11₁ₖ, 11₂ₖ) umfasst, wobei jedes der Cluster auf einem dedizierten Funkkanal (CH₁, CH₂) arbeitet und
alle Cluster auf einen gemeinsamen Kanal CS zugreifen, wo jedes Cluster über einen Zeitschlitz des gemeinsamen Kanals CS verfügt, dediziert für die Gruppe von Knoten, die zu dem Cluster gehören, wobei das System Folgendes umfasst:
• wenigstens der Cluster-Führer (24₁) des ersten Clusters (10₁) umfasst ein Modul, das zum Aussenden einer Signalisierungsnachricht M zu einer Gruppe von Knoten (11₁ₖ) ausgelegt ist, die sich in seinem Cluster (10₁) befinden, unter Nutzung eines dedizierten Funkkanals CH₁,
• die Knoten (11₁ₖ) des ersten Clusters (10₁) sind mit Mitteln zum Empfangen und Decodieren der Signalisierungsnachricht M und mit Mitteln zum Weiterleiten der Signalisierungsnachricht M zu einem oder mehreren Knoten (11ⱼₖ) der anderen Clustern des Netzwerks ausgestattet, die in Funkreichweite liegen, unter Nutzung eines verteilten kooperativen kohärenten Übertragungsmechanismus, auf einer Radioressource eines gemeinsamen Kanals CS, dediziert für das erste Cluster auf die folgende Weise:
der Cluster-Führer (24₁) ist zum Auswählen von einem oder mehreren Knoten (11₁ₖ) konfiguriert, um die Nachbar-Cluster zu erreichen,
• wenn zwei gewählte Knoten (11₁ₖ) die externe Nachbarschaft nicht teilen, dann sind sie zum Senden auf demselben Zeitschlitz konfiguriert, ohne sich gegenseitig zu stören,
• wenn zwei gewählte Knoten (11₁ₖ) einen Teil ihrer externen Nachbarschaft gemeinsam haben, dann sind sie zum Nutzen desselben Zeitschlitzes auf eine kooperative Weise konfiguriert, um die Qualität ihrer Übertragung zu verbessern,
• der oder die Relais-Knoten (11ⱼₖ) von anderen Clustern, die die Signalisierungsnachricht M empfangen und decodiert haben, sind zum Übertragen derselben zu ihrem Cluster-Führer (24ⱼ) unter Nutzung eines verteilten kooperativen Übertragungsverfahrens auf ihrem dedizierten Funkkanal CHⱼ konfiguriert.

4. System nach Anspruch 3, **dadurch gekennzeichnet, dass** ein für ein Cluster 10ⱼ dedizierter Kanal CHⱼ Folgendes umfasst: einen Empfangsschlitz RXⱼ (31ⱼ), mehrere Signalisierungs-Relais-Schlitze RSCHⱼ (32ⱼ), die von einer Gruppe von Knoten benutzt werden, die zu einem bestimmten Cluster gehören, zum Weiterleiten der von Nachbar-Clustern empfangenen Inter-Cluster-Signalisierung zu ihrem Cluster-Führer, einen dedizierten Signalisierungsschlitz CHSCHⱼ, der für die Cluster-Führer dediziert ist.

## Claims

1. Method for broadcasting one or more signalling messages in a communication network comprising at least two clusters (10₁, 10₂), each of the clusters comprising at least one cluster head (24₁, 24₂) which is capable of administering communications and a plurality of nodes (11₁ₖ, 11₂ₖ) which are provided with transmitting/receiving means (12, 13), each of the clusters operating on a dedicated radio channel (CH₁, CH₂),
and all the clusters accessing a common channel CS, in which each cluster has a time slot of the common channel CS which is dedicated to the set of nodes which belong to the cluster, the method comprising at least the following steps:
• at least the cluster head (24₁) of the first cluster (10₁) transmits the signalling message M towards a set of nodes (11₁ₖ) which are located in the cluster (10₁) thereof using the dedicated radio channel CH₁ thereof,
• the nodes (11₁ₖ) of the first cluster (10₁), which have received and decoded the signalling message M, relay this signalling message M towards one or more relay nodes (11ⱼₖ) which belong to other clusters of the network which are in radio range using a cooperative coherent transmission mechanism which is distributed over the time slot of the common channel CS which is dedicated to the first cluster in the following manner:
the cluster head (24₁) selects one or more nodes (11₁ₖ) in order to reach the adjacent clusters,
• if two nodes (11₁ₖ) selected do not share external proximity, they transmit on the same time slot, without interfering with each other,
• if two nodes (11₁ₖ) selected have in common a portion of the external proximities thereof, they use the same time slot in a cooperative manner in order to improve the quality of the transmission thereof,
• the relay node(s) (11ⱼₖ) of the other clusters (10ⱼ), which have received and decoded the signalling message M, transmit it to the cluster head (24ⱼ) thereof using a distributed cooperative transmission method on the dedicated channel (CHⱼ) thereof.

2. Method according to claim 1, **characterised in that** a channel CHⱼ dedicated to the cluster (10ⱼ) comprises a slot (31ⱼ) for reception RXⱼ, a plurality of slots RSCHⱼ, (32ⱼ), which are used by a set of nodes belonging to a cluster in order to relay in a cooperative manner the inter-cluster signalling which is received from the adjacent clusters towards the cluster head thereof, a signalling slot CHSCHⱼ which is dedicated to the cluster heads.

3. System for broadcasting signalling messages within a communication network comprising at least two clusters (10₁, 10₂), each of the clusters comprising at least one cluster head (24₁, 24₂) which is capable of administering communications and a plurality of nodes (11₁ₖ, 11₂ₖ) which are provided with transmitting/receiving means (12, 13), each of the clusters operating on a dedicated radio channel (CH₁, CH₂),
and all the clusters accessing a common channel CS, in which each cluster has a time slot of the common channel CS which is dedicated to the set of nodes which belong to the cluster, the system comprising:
• at least the cluster head (24₁) of the first cluster (10₁) comprises a module which is capable of transmitting a signalling message M towards a set of nodes (11₁ₖ) which are located in the cluster (10₁) thereof using a dedicated radio channel CH₁,
• the nodes (11₁ₖ) of the first cluster (10₁) are provided with receiving and decoding means for the signalling message M and means for relaying the signalling message M towards one or more nodes (11ⱼₖ) of the other clusters of the network which are in radio range using a cooperative coherent transmission mechanism which is distributed over a radio resource of a common channel CS which is dedicated to the first cluster in the following manner: the cluster head (24₁) is configured to select one or more nodes (11₁ₖ) in order to reach the adjacent clusters,
• if two nodes (11₁ₖ) selected do not share external proximity, they are configured to transmit on the same time slot, without interfering with each other,
• if two nodes (11₁ₖ) selected have in common a portion of the external proximities thereof, they are configured to use the same time slot in a cooperative manner in order to improve the quality of the transmission thereof,
• the relay node(s) (11ⱼₖ) of the other clusters which have received and decoded the signalling message M are configured to transmit it to the cluster head (24ⱼ) thereof using a distributed cooperative transmission method on the dedicated radio channel (CHⱼ) thereof.

4. System according to claim 3, **characterised in that** a channel CHⱼ dedicated to a cluster (10ⱼ) comprises a slot (31ⱼ) for reception RXⱼ, a plurality of signalling relay slots RSCHⱼ, (32ⱼ), which are used by a set of nodes belonging to a specific cluster in order to relay the inter-cluster signalling which is received from the adjacent clusters towards the cluster head thereof, a signalling slot CHSCHⱼ which is dedicated to the cluster heads.
